# EUROPEAN PATENT APPLICATION

(11) **EP 3 705 197 A1**
(43) Date of publication of application: **09.09.2020**
(21) Application number: 19161748.9
(22) Date of filing: 08.03.2019
(51) Int. Cl.: B09B 3/00, G06Q 10/00, B07C 5/00, B07C 5/34, B07C 5/38, B09B 5/00, G06Q 30/00

(54) **CLOSED LOOP RECYCLING PROCESS AND SYSTEM**

(71) Applicant: Graf von Stauffenberg, Philippe, London SW13 9EU (GB)
(72) Inventor: Graf von Stauffenberg, Philippe, London SW13 9EU (GB)
(74) Representative: Fuchs Patentanwälte Partnerschaft mbB

(57) **Abstract**

This invention relates to a closed loop process and system for collecting and recycling of materials commonly used for packaging. The process comprises the steps of collecting and sorting of items containing material to be recycled, creating one or more datasets relating to the portions of sorted materials containing information relating to the quantity and origin as well as identity, brand, type and/or quality of sorted material, and registering at least the quantity and origin and optionally also about identity, brand, type and/or quality of sorted material in a blockchain. Embodiments of the invention comprise performing software assisted item recognition for determining at least one property of an item.

## Description

This invention relates to a process and system for collecting and recycling of materials commonly used for packaging.

One of the most visible challenges of global population and wealth growth is the intelligent management of plastic packaging, which is indispensable for its ability to provide adequate supplies of food and consumer goods. Today, more than $ 100 bn worth of plastics are not recovered as the cost of collection and sorting currently exceeds that value. However, almost all plastic waste is recyclable. Recycling rates are merely a function of the economics of collecting, cleaning and sorting plastic waste. This can be achieved primarily by introducing technologies that make a voluntary Extended Producer Responsibility ("EPR") program possible.

The use of plastics has increased twentyfold in the past half-century. In 2016 311 million tons of plastics were produced. This number will triple by 2050. Each year, 8 million tons of waste plastics leak into the ocean. At this rate, our world oceans are expected to have more plastics than fish by 2050. After a short first-use cycle, 95 % of plastic packaging material having a value of $ 120-180 billion annually is lost to the economy. Most growth is in developing economies as growing middle classes shop for packaged goods in supermarkets. 40 million people work in the waste management sector worldwide, 50 % are informal waste pickers.

If this growth is not accompanied by an effective system for removing, recycling and re-marketing these materials for future use, the weight of the world's plastic in oceans will exceed that of all sea life by 2050 with potentially disastrous effects.

Legislation is scant and ineffective. Even in the most effective dual systems for separating recyclable packaging materials from other household waste more than 40 % of plastics are "thermally recycled" because of organic contamination or the high cost of separating, washing and treating such waste with mechanical recycling methods. Most countries have no such legislation at all. However, the EU has recently passed a law to limit landfills to 5 % of volume and increase recycling of plastics to 70 %.

Landfill space is becoming scarce. Even in developing economies the social and ecological cost of landfills is such that their use is severely restricted. Waste management companies have to pay ever higher prices to landfill municipal waste.

Global plastic production developed from 2000 kt pa in the 1950s to 407 000 kt pa in 2015. During that period, it is estimated that 8.3 million kt of plastics have been produced, and of this, around 6.3 million kt thought to have become waste. Half of all the plastics ever produced were made in the last 13 years. If recent trends continue, an estimated 26 billion tons of plastics will be produced over the next 30 years. Reducing plastic will require a change in thinking from traditional linear economic models (i.e. manufacture-use-dispose), to more circular economic models, whereby the use of plastics is optimized, and plastics are kept within the use cycle for longer, through reuse and recycling.

Currently it is estimated that the consumption of oil by the entire plastics sector will grow from 6 % to account for 20 % of the total consumption by 2050 due to packaging demand if no alternative sources of Naphtha - the feedstock for plastic production - are developed.

The highest incidence of plastic waste comes from packaging, particularly of low weight plastic packaging (LWP). Given its function, a typical package will get discarded within 6 weeks of being filled. Globally, demand for polymers in packaging is increasing with increasing global food demand and is coupled directly to GDP growth.

Packaging's main purpose is to transport, protect, preserve and store goods from manufacturing to consumption, and carry brand, marketing and product information. The Circular Economy will drive even more effort to design products and packaging systems that minimize the use of materials, energy and water and minimize the environmental impact throughout the product lifecycle.

Good packaging is packaging that protects products throughout their journey from farm or factory to the final end user with minimum environmental impact and minimum waste from product and used packaging.

Plastics packaging brings many benefits to the global economy: it is versatile, lightweight, cheap and can even contribute to resource efficiency (reduced food waste and fuel consumption for transportation). It accounts for 25-40 % of all plastics produced and its volumes are expected to continue their strong growth, doubling within 15 years and more than tripling by 2050. This growth is in particular supported by developing countries. In addition the plastic industry plays a vital role in the economy, with 1.45 million employees and a turnover of € 350 bn for the EU alone.

But plastics packaging is also associated with two major issues: a high dependence on virgin fossil feedstock contributing to a fossil fuel lock-in effect, and a low rate of recycling / reuse of plastics leading to landfilling or disposal and eventually significant leakage of plastics into the environment. More than 90 % of plastics today are produced from fossil fuel feedstock. And between today and 2050, petrochemicals are expected to account for 60 % of the total demand rise expected for the entire oil industry. Today only 14 % of these packaging plastics are recycled, and > 70 % end up in landfills or are leaked into nature. After a short first-use cycle, 95 % of plastic packaging material is lost to the economy (value of $ 120-180 billion p.a.). At a global level, the annual leakage of plastic waste into the ocean amounts to 8-12 million tons. LWP is estimated to represent the highest share, as its weight, size and low-value make it prone to uncontrolled disposal.

The amount of Light Weight plastic packaging (LWP) leave many authorities at a loss of how to handle it. Collection, transport and sorting are relatively more difficult given that it is usually not separated and very often contaminated with organic materials, which make straightforward melting of individual types of plastics ("mechanical recycling") inefficient. Plastic that ends up in litter, illegal dumps and in oceans can generally be described as mismanaged.

Plastic products are highly reusable and easily recyclable if separated well into discrete polymer categories. They require far less energy and resources than if produced from virgin materials. Reusable containers generate 29 % fewer greenhouse gas (GHG) emissions, 39 % lower energy consumption, and 95 % less solid waste than single-use packaging. Each kg of plastics recycled in modern facilities saves about 1.4 kg of CO₂.

The global LWP volume is estimated to be over 51 million tons. The first 20 countries according to GDP consume approximately 80 % of the total LWP. BRIC markets comprise approximately 25 % of global demand, increasing as their economies further develop. In the future, we estimate that these BRIC countries will become large suppliers of materials as collection & sorting capacity as well as energy are cheap. However, at this time very little of the plastic is recovered. Even in developed countries, recycling (as opposed to burning for energy) rates are low.

The economics of recycling depend on the quality and type of feedstock coming from the collection process. Generally, only PET, HDPE, and clean fractions of LDPE and PP are recycled. The dirty and contaminated fractions of all other plastics are expensive to recycle, and are thus burnt for energy or landfilled, often landing in oceans.

WO 2018/099549 A1 discloses a recycling system that uses a tagging unit that physically tags (i.e. identifies) recyclable material elements. Hence, all parameters stored with respect to such an element are specific to said unique individual element. For example, the system registers identity and location of the element, thereby keeping records of the distribution of the elements such as containers. The system comprises a peer-to-peer network comprising peer-to-peer applications configured to store identifier and status parameter data sets relating to the recyclable material element in a registry storage. The system operates without any central instance, i.e. it is a purely distributed network. In WO 2018/099549 A1 tagging of recyclable material elements takes place at the place of production of the recyclable material elements.

### Problem

It is an object of this invention to provide a process and system that facilitates cost-effective and efficacious recycling, as well as creating dependable information for potential buyers. The need for investments in machines and administration should be low, making the process and system particularly relevant for developing countries without an established collection and sorting infrastructure. Further, the process and system should provide inherent incentives and administrative services to the participating entities.

### Description of the invention

In an embodiment, the invention relates to a closed loop process for recycling material comprising the steps of
a. collecting a plurality of items of material that comprise one or more materials to be recycled,
b. sorting the collected items of material according to their identity, brand, type and/or quality, to obtain portions of sorted material items,
c. creating one or more datasets relating to the portions of sorted materials, the datasets containing information relating to the quantity of sorted material, and further containing information about identity, brand, type and/or quality of the sorted material,
d. reporting information at least about the quantity of sorted material, and optionally also about identity, brand, type and/or quality, to a network of nodes for registration in a blockchain.

General aspects of various embodiments are that the process and system allows the identification and documentation of materials collected, enabling easy manual sorting, and tracking their progress through a "Closed Loop value chain." The software may include artificial intelligence such as machine learning algorithms for image recognition, smart filing, dash-boarding, etc. This has the additional advantage that the manufacturers of the items of material need not join the system or voluntarily participate in the process, as their items will be identified by means other than tags or identifiers attached to the items for purposes of machine recognition.

The use of permissioned blockchain technology with a "trustless" verification system, tied to immutable recording of collected plastic waste can create an ecosystem for converters, Fast Moving Consumer Goods (FMCG) companies and retailers in which there is full accountability. The aim of the invention is to disrupt current waste flows where they are not working in order to create a Closed Loop. It will challenge current operating procedures and enhance the existing value chain significantly.

The recycling compliance industry has been plagued by fraud and inefficiencies. Use of the blockchain technology can eliminate most weak points for these data intensive compliance businesses. Sorting companies exist only in developed economies due to the high capex required. New reward systems afforded by Al driven image recognition of waste will be designed to incentivize collectors to bring clean and sorted plastic waste. Finally, traditional intermediaries like waste brokers can be disintermediated through the transparency afforded by the blockchain, and recycling plants will be able to operate at near full capacity through input contracts. Waste flows will be increasingly predictable for conventional mechanical recycling as the system will know location, quality and type of recyclates available at any moment - this intelligence does not exist today.

The disruption of current value chains will create a larger, more transparent market for recycled plastics. The use of permissioned blockchain technology can create an ecosystem for converters, FMCG companies and retailers with the following applications:
1. Certification of recycled content for packages
2. Packaging tracker with additional product information for consumers and businesses
3. Dashboard for Supply Chain Management
4. Data Visualisation, Data Analytics, Predictive Analytics for FMCG and retailers
5. B2B Marketplace with quality assurance
6. Digital Cooperatives and Matchmaking for fragmented mechanical recyclers and buying cooperatives of packaging
7. Reputation Systems for market participants

In the context of this invention the "identity" of an item refers to the identification of a unique item based on an identifier such as a tag or other features that are specific ("unique item"), or pseudo-specific to said individual item. "Pseudo-specific" means that a tag or identifier may not be unique for a specific item, but further information available about the item effectively allow for identification of a specific item (for example its Stock Keeping Unit SKU). This means that the individual item can be traced throughout the closed loop based on its identity. This can be achieved for example by assigning an individualized tag or identifier to the individual item or a number of equal items. In the context of this invention it is not preferred to assign individual tags or identifiers to items. This will only be feasible once producers have created individualized QR or RFID codes or for high-value items. This will be implemented above all in anti fraud systems to prevent double counting individual items in EPR systems such as deposit return systems.

Identified containers are linked to a database where one can see attributes of each Stock Keeping Unit (SKU) such as
- Quality of Materials identified: The "quality" of the item refers to the status of the item such as its cleanliness, the mix of types in a batch (shipment), rest materials (contamination), as well as other distinguishing factors. Quality can be improved by collectors by delivering types in separate batches as it will reduce sorting in the further process. Grades of cleanliness and/or purity may be represented by percentages, numbers or letters that may be registered in a database and/or the blockchain. Quality has an impact on the price of the collected material.
- Quantity: The "quantity" refers to the amount, volume and/or number of material items. Combined with weight per item data held on a database it can be easily converted into specific batch weights. At least the quantity of collected / sorted material will be reported to the blockchain.
- Type of material (e.g. plastic type, metal type, etc.): The "type" of an item refers to materials contained in the item such as the polymer or polymer mixture that the item is made of. For example, types of material may be represented by numbers or letters that may be registered on open databases, proprietary database as well as in the blockchain. Sorting the items depending on their type is very useful as it facilitates easy recycling of the material contained in the items. In fact, well-sorted material is a prerequisite for economical recycling for at least some materials. Also, the type of material determines the price to be paid for said sorted material.
- Weight of the item, and therefore the value (different types of materials have different prices, which when multiplied with their weight, produce a value).
- Brand information (producer, retailer, location, etc.): The "brand" of an item refers to the origin of the item such as the item's producer or retailer. For example, sorters may classify the sorted items based on their brand, such as Coca-Cola®. Determining the brand (or identity) of an item allows for allocation of said item to a producer so that information about the amounts of sorted items from a certain source will become available. A producer can be ranked based on a proportion of items sorted (and recycled) relative to the amount of items sold, which may provide an incentive to the producer to participate in the system and improve his rank based on recycled items.
- Additional data such as
   - Other identifiers, Nutrition Information, recyclability
   - Place of purchase, sales, etc.

These technologies can be used by both the consumer and other providers of information and publicity. Steps in particularly preferred embodiment are
a. collecting a plurality of items of material that comprise one or more materials to be recycled, documenting their identity, brand, type and allowing the system to determine the quality of a shipment,
b. facilitation of sorting the collected items of material according to their identity, brand, type using either manual or robotic means as well as other established separation techniques,
c. creating datasets relating to the
   - volumes of collected and sorted materials,
   - cleanliness and mix of above materials per shipment,
   - identity, brand, type, as well as other unique identifiers held in a packaging database,
d. reporting the above information to a centralized database for evaluation and aggregation as well as certain segments or processed data to a network of nodes for registration in a blockchain.

Reporting raw or processed information of material collected for registration in a blockchain allows for easy access of recyclers to sorted material for recycling. It also allows the establishment of a voluntary EPR system, which allows the reporting of collection volumes to producers in order to enable them to pay for the collection costs associated with their products. Data integrity persists as the primary concern of any data ecosystem in retail and product management. This concern spans the integrity of data inside the ecosystem itself (infrastructure, servers, data storage), but more importantly in a multi jurisdiction, currency, and methodology world such as waste management the integrity of the data sources that feed information into the ecosystem.

A system according to the invention supports a voluntary EPR methodology by incorporating various aspects of blockchain technology (e.g. distributed ledger technology, smart contracts), and highly specific tokenomics. The system needs to predict, locate, and react to the events that occur throughout various stages of the Closed Loop.

The advantage over previous EPR IT systems is that the invention has the ability to create an accountability and financing mechanism that is more secure - and therefore incorruptible - than previous systems. Blockchain can secure transactions and document process chains without a centralized guarantor or governor, in a system that is public and transparent, and where no single entity can corrupt or con the system.

The system also ensures the smooth running of the recycling value chain. For example, a recycler specialized in recycling PET bottles may efficiently filter the information in the blockchain in order to find the desired quantities of sorted PET bottle material. A recycler specialized in recycling aluminum will be able to find the desired quantities of sorted aluminum. The information in the blockchain may be accessible to everyone, or access to the information may be restricted to participants in the recycling process (permissionless vs. permissioned system). It is preferred that the information is made available only to registered participants. There may also be further restrictions for access to information about other participants' data. The information in the blockchain may be encrypted. The blockchain may execute smart contracts for the transfer of fungible tokens in exchanged for sorted material delivered to a recycler.

The step of sorting items of material for at least some of the plurality of items may include separating items of material into smaller items according to their identity, type and/or quality. For example, composite items that comprise more than one type of material may be separated into a plurality of parts so that portions of sorted material with high purity can be obtained. Additionally or alternatively, particularly dirty or non-identified parts of an item may be removed from the item so that the remaining parts of the item can be allocated to a sorted portion of items. Dirty and non-identified parts may be subjected to anaerobic gasification.

The steps of collecting and sorting may take place in the same or different locations. This may include that collecting and sorting can be performed by the same or different entities. For example, collection of items of material to be recycled may be collected by municipal waste collectors and transferred to sorters who sort the material items. In an embodiment, sorting the items may be performed by pickers who gather the items from a landfill or the environment. It is an aspect of this invention that even these pickers can participate in the process and achieve fair remuneration for the sorted material items they sell to recyclers. Due to the preferred use of smart contracts executable by the blockchain, even small payments can be made without disproportionate administrative effort.

The process may comprise the additional step of transferring items of material from a collecting entity to a sorting entity. The collector is not limited to municipal waste collectors, but includes any entity that collects items of material to be recycled. In certain embodiments, collectors and sorters are the same entity, i.e. collecting and sorting items of material to be recycled may be performed by the same company, collective or person. Thus, collectors may increase the value of collected items by pre-sorting and/or cleaning the material prior to transferring the items of material to the sorters, or collectors may sort the items and sell them directly to recyclers. The sorter (or recycler) may pay the collector for the transfer of the material, e.g. via smart contracts and tokens executable by the blockchain.

The process may comprise the additional step of reporting at least the quantity of transferred material, and optionally also identity, brand, type and/or quality, to a network of nodes for registration in a blockchain. Reporting this information to the blockchain serves the purpose of transparency, i.e. the transferred quantity, identity, brand, type and/or quality, will be available on the blockchain for inspection to at least some participants in the system. Thereby, the collectors and/or sorters can be ranked according to their performance and contribution to the material cycle. Additionally, recyclers can evaluate whether they will be able to process the available amount, or whether the amount is large enough for economical recycling.

The process may comprise the step of providing a material items database configured to store information about material items, such as type and weight of an item. The database may be accessible to the participants in the system via computer networks, e.g. the internet. The data in the database help to create datasets relating to the items of material. For example, a sorter may have determined the identity of an item, or the brand of an item. The database may contain information relative to the identified item or brand. Thereby, the sorter may complete the dataset relating to the sorted item without having to determine the type of material used in the item. This will facilitate participation of sorters, e.g. pickers, as they will often not have access to the equipment or education required to determine types of material.

In a preferred embodiment, the participants of the process and system, such as sorters, collectors, recyclers and converters, may use software for accessing at least some information about items of material for internal use. The database may then be used to complete the information.

The sorting step may comprise determining at least one property of an item, such as identity, brand, type, quality and/or quantity. In preferred embodiments, the sorting step comprises determining all of the mentioned properties. Determining at least one property of an item may include accessing information about raw material items from the material items database. Determining the properties may in part be performed with reference to the item itself, e.g. by looking at the item or reading labels, and in part by retrieving additional information from the material items database. Determining at least one property of an item may comprise performing software assisted item recognition. Software assisted item recognition may be based on traditional programmed algorithms and/or machine learning algorithms. Software assisted item recognition may include extracting features form a captured image. The sorting step may comprise capturing an image of one or more items of material using an image capturing device such as a camera.

Performing software assisted item recognition may comprise utilizing a machine learning method for determining at least one property of the item. The machine learning method may comprise a supervised machine learning method such as a support vector machine or an artificial neural net.

Determining at least one property of an item may comprise utilizing at least one item property capturing device such as a spectral sensor, a photometer, a camera, a weighing scale, a hardness tester, an RFID reader, a QR code reader and/or a bar code reader. It is one of the advantages of using machine learning methods that properties of items can be identified without sophisticated hardware. A smartphone with a camera may be sufficient to capture an image of the item or items that will enable identification. The software may assist the sorter in determining one or more properties of the item and thereby allow the sorter to effectively sort the material so that he may achieve the best price for sorted items.

The process may comprise the step of adding one or more blocks to the blockchain, the block containing information about at least the quantity of sorted material, and optionally also identity, brand, type and/or quality of sorted material. For creating the block to be added to the blockchain the information may either be used directly or, preferably, only a hash value of the information is used. In the latter case, the full information is collected in a database on a server and the blockchain block containing the hash value serves as an external means for proofing integrity of the database. The process of this invention uses the blockchain to provide an immutable register of transactions performed in the material cycle. One or more participants of the system and process may report their transactions or contributions to the blockchain, e.g. the amount of sorted material of a certain type. The respective data may be added to the blockchain, and other participants may be granted access to read the information.

The process may include the possibility of smart contracts between the participants. For example, a sorter may report the amount and type of available sorted material portions to the blockchain where this information may be read by a recycler who is interested in purchasing this material for recycling. A smart contract may be executed once the sorter delivers the respective sorted items of material to the recycler who reports the material transfer to the network of nodes. Tokens may be implemented in the blockchain. The tokens may be used to pay for the delivery of sorted items of material, i.e. tokens may be transferred from the recycler to the sorter once the material was transferred and confirmed by the recycler. A part or all of the reported information about sorted material may be made available to one or more recyclers.

The blockchain may be administered, or written by a network of nodes in a purely distributed peer to peer network, or a hybrid network of nodes and one or more servers. The participants in the process and system may be completely or partially identical with the nodes of the network. In embodiments, a material transfer from a delivering participant, e.g. collector or sorter, to a receiving participant, e.g. sorter or recycler, may be reported to the network of nodes. For example, a material transfer from a collector to a sorter is reported by the collector. A token transfer may then be executed by a smart contract executed by the blockchain.

### Participants

The recycling process steps described herein may be performed by the same or different participants in the process and system. A list of optional participants is given below.

"Producers" are entities such as individuals, collectives or companies who produce products containing or consisting of recyclable material, or products packaged in recyclable material. Examples of producers are manufacturers of food and cosmetic products. In the context of this application the terms "producer" and "FMCG company" or "FMCG producer" are used synonymously.

"Retailers" are entities such as individuals, collectives or companies who sell products containing or consisting of recyclable material, or products packaged in recyclable material. Retailers and producers may be the same or different entities. Examples of retailers are supermarkets. Retailers may be producers in the context of own label products.

"Consumers" are entities such as individuals, collectives or companies who consume or use products containing or consisting of recyclable material, or products packaged in recyclable material.

"Collectors" are entities such as individuals, collectives or companies who collect products containing or consisting of recyclable material, or product packaging material after use.

"Sorters" are entities such as individuals, collectives or companies who sort products containing or consisting of recyclable material, or product packaging material into portions of sorted material items. Collectors may also perform - at least to a certain extent - the role of sorters, i.e. the collector delivers already (pre-)sorted material to the sorter and/or recycler.

"Recyclers" are entities such as individuals, collectives or companies who recycle products containing or consisting of recyclable material, or product packaging material into recycled material (e.g. pellets). Recyclers include companies operating specialized washing and crushing facilities with thermodynamic reactors to re-melt waste plastics and pelletize them so that they become competitive with virgin pellets for new plastics packaging extrusion. Recyclers may also partially perform tasks of a converter when delivering semi-finished products (e.g. packaging films or bottle preforms) instead of pellets.

"Converters" are entities such as individuals, collectives or companies who convert recycled material into new products or into packaging on behalf of producers. Producers may also partially or fully perform the role of converters, e.g. in the case when a recycler already delivers packaging films and the producer converts these films in a form-fill-seal application into the actual packaging product.

### Process steps

In an optional production step products containing or consisting of recyclable material, or products packaged in recyclable material are produced by one or more producers. The products that contain recyclable material and the product packaging material are collectively referred to as "items of material", or "material items" in this description. Converter and producer may be different entities, or the same entity. The production step may comprise producing one or more items of material. For example, the products may comprise recyclable material or they may be packaged in recyclable packaging material. Examples of such products are food products and cosmetic products.

The production step may comprise determining information relating to quantity, identity, brand, type and/or quality of the material items. For example, the manufacturer may determine the amounts, e.g. mass, number, volume, of produced material items or the amount or quality of recyclable material contained in these items.

The production step may comprise generating a dataset in a predetermined format, the dataset containing information relating to quantity, identity, brand, type and/or quality of the recyclable material contained in the material items produced. The dataset may be generated using computer hardware and software, such as a stationary computer, a smartphone, a server, a tablet computer, or any other computer hardware running software configured to perform this task.

The computer hardware used to generate the dataset may comprise data capturing devices for capturing the information in the dataset. Suitable data capturing devices include cameras, scales, spectrometers, clocks or any other device suitable to capture at least one piece of information to be part of the dataset. Additionally or alternatively, the computer hardware may comprise one or more interfaces for receiving information to be part of the dataset. In an embodiment, the computer hardware comprises an interface for receiving information that was captured by one or more external data capturing devices and/or from a database, such as the material items database. For example, the interface may allow for transmission of production data to the computer hardware from a database that contains information relating to the amount or composition of recyclable material produced in a production facility.

The production step may include reporting the dataset and/or all or a part of the available information at least about the quantity of produced material items, and optionally also about identity, brand, type and/or quality, to the network of nodes for registration in the blockchain.

The computer hardware may run at least one computer program configured to act as a node in a distributed peer to peer network. The program may be configured to add blocks to and/or evaluate blocks of the blockchain data structure. For creating the block to be added to the blockchain the information may either be used directly or, preferably, only a hash value of the information is used. In the latter case, the full information is collected in a database on a server and the blockchain block containing the hash value serves as an external means for proofing integrity of the database. The information reported to the blockchain and/or the server by the producer may be encrypted. Asymmetric encryption methods may be used. The information may be stored in one or more blocks of the blockchain. Each participant may run at least one node of the network of nodes that maintains the blockchain. Alternatively, only some of the participants may run at least one node. For example, the permission to contribute a node in the network may be restricted to trusted participants.

The production step may include performing a token transaction registered in the blockchain to account for the producer's act of putting new or recycled material into the material cycle. The token transaction may include purchasing an amount of tokens. The amount of tokens may relate to the identity, quality and/or quantity of the recyclable material contained in the products and/or product packaging items produced. The token transaction may be executed by means of smart contracts. The smart contract may credit the producer's account with tokens in exchange for fiat currency paid by the producer. A smart contract may be triggered by the producer reporting the dataset and/or all or a part of the available information at least about the quantity of produced material items, and optionally also about identity, brand, type and/or quality, to the network of nodes for registration in the blockchain. The amount of tokens may depend on the reported quantity, identity, brand, type and/or quality of material items.

### Retail step

In an optional retail step the products and/or product packaging items may be purchased from the producer and sold to one or more customers, or the material items may be sold to one or more customers by the producer without the involvement of intermediaries.

The retail step may comprise determining information relating to quantity, identity, brand, type and/or quality of the material items. For example, the retailer may determine the amounts, e.g. mass, number, volume, of sold material items or the amount or quality of recyclable material contained in these items.

The retail step may comprise generating a dataset in a predetermined format, the dataset containing information relating to quantity, identity, brand, type and/or quality of the recyclable material contained in the material items sold to customers. The dataset may be generated using computer hardware and software, such as a stationary computer, a smartphone, a server, a tablet computer, or any other computer hardware running software configured to perform this task.

The computer hardware used to generate the dataset may comprise data capturing devices for capturing the information in the dataset. Suitable data capturing devices include cameras, scales, spectrometers, clocks or any other device suitable to capture at least one piece of information to be part of the dataset. Additionally or alternatively, the computer hardware may comprise one or more interfaces for receiving information to be part of the dataset. In an embodiment, the computer hardware comprises an interface for receiving information that was captured by one or more external data capturing devices and/or from a database, such as the material items database. For example, the interface may allow for transmission of production data to the computer hardware from a database that contains information relating to the amount or composition of recyclable material produced in a production facility.

The retail step may include reporting the dataset and/or all or a part of the available information at least about the quantity of sold material items, and optionally also about identity, brand, type and/or quality, to the network of nodes for registration in the blockchain.

The computer hardware may run at least one computer program configured to act as a node in a distributed peer to peer network. The program may be configured to add blocks to and/or evaluate blocks of the blockchain data structure. For creating the block to be added to the blockchain the information may either be used directly or, preferably, only a hash value of the information is used. In the latter case, the full information is collected in a database on a server and the blockchain block containing the hash value serves as an external means for proofing integrity of the database. The information reported to the blockchain and/or the server by the retailer may be encrypted. Asymmetric encryption methods may be used. The information may be stored in one or more blocks of the blockchain.

The retail step may include performing a token transaction registered in the blockchain to account for the retailer's act of putting new or recycled material into the material cycle. The token transaction may include purchasing an amount of tokens. The amount of tokens may relate to the identity, quality and/or quantity of the recyclable material contained in the products and/or product packaging items sold to customers. The token transaction may be executed by means of smart contracts. The smart contract may credit the retailer's account with tokens in exchange for fiat currency paid by the retailer. A smart contract may be triggered by the retailer reporting the dataset and/or all or a part of the available information at least about the quantity of collected material items, and optionally also about identity, brand, type and/or quality, to the network of nodes for registration in the blockchain. The amount of tokens may depend on the reported quantity, identity, brand, type and/or quality of material items.

### Collecting step

In the collecting step the items of material are collected, e.g. collection may be organized by municipal waste collector from consumers after use of the items.

The collecting step may comprise determining information relating to quantity, identity, brand, type and/or quality of the material items. For example, the collector may determine the amounts, e.g. mass, number, volume, of collected material items or the amount or quality of recyclable material contained in these items.

The collecting step may comprise generating a dataset in a predetermined format, the dataset containing information relating to quantity, identity, brand, type and/or quality of the recyclable material contained in the material items collected. The dataset may be generated using computer hardware and software, such as a stationary computer, a smartphone, a server, a tablet computer, or any other computer hardware running software configured to perform this task.

The computer hardware used to generate the dataset may comprise data capturing devices for capturing the information in the dataset. Suitable data capturing devices include cameras, scales, spectrometers, clocks or any other device suitable to capture at least one piece of information to be part of the dataset. Additionally or alternatively, the computer hardware may comprise one or more interfaces for receiving information to be part of the dataset. In an embodiment, the computer hardware comprises an interface for receiving information that was captured by one or more external data capturing devices and/or from a database, such as the material items database. For example, the interface may allow for transmission of production data to the computer hardware from a database that contains information relating to the amount or composition of recyclable material produced in a production facility.

The collecting step may include reporting the dataset and/or all or a part of the available information at least about the quantity of collected material items, and optionally also about identity, brand, type and/or quality, to the network of nodes for registration in the blockchain.

The computer hardware may run at least one computer program configured to act as a node in a distributed peer to peer network. The program may be configured to add blocks to and/or evaluate blocks of the blockchain data structure. For creating the block to be added to the blockchain the information may either be used directly or, preferably, only a hash value of the information is used. In the latter case, the full information is collected in a database on a server and the blockchain block containing the hash value serves as an external means for proofing integrity of the database. The information reported to the blockchain and/or the server by the collector may be encrypted. Asymmetric encryption methods may be used. The information may be stored in one or more blocks of the blockchain.

The collecting step may include performing a token transaction registered in the blockchain to account for the collector's act of collecting recyclable material and thereby contributing to recycling thereof. The token transaction may include crediting an amount of tokens to the collector's account, and debiting an amount of tokens from the sorter's account who receives collected material items. The amount of tokens may relate to the identity, quality and/or quantity of the recyclable material contained in the products and/or product packaging items collected by the collector. The token transaction may be executed by means of smart contracts. The smart contract may credit the collector's account with tokens in exchange for collected material items transferred to a sorter. A smart contract may be triggered by the collector reporting the dataset and/or all or a part of the available information at least about the quantity of collected material items, and optionally also about identity, brand, type and/or quality, to the network of nodes for registration in the blockchain. Triggering the smart contract may additionally require the sorter's confirmation of the relevant properties of transferred material items. The amount of tokens may depend on the reported quantity, identity, brand, type and/or quality of material items.

In the case of the invention, the collector is incentivized to provide batches of high quality materials to a collection station. Individual collectors can separate and clean materials at curbside into separate batches and deliver them to collection stations:
- Unique types of materials so that they can be more easily recycled. Further sorting can be made according to color.
- Clean and empty (uncontaminated) materials.

### Sorting step

In the sorting step, typically done at a reception station, the items of material are sorted to obtain portions of sorted items. Before sorting, a sorter may purchase collected material items from a collector. The higher the quality of material collected and delivered, the fewer sorting steps will be carried out by the reception station.

The sorting step may comprise determining information relating to quantity, identity, brand, type and/or quality of the material items. For example, the sorter may determine the amounts, e.g. mass, number, volume, of sorted material items or the amount or quality of recyclable material contained in these items.

The sorting step may comprise generating a dataset in a predetermined format, the dataset containing information relating to quantity, identity, brand, type and/or quality of the recyclable material contained in the material items sorted. The dataset may be generated using computer hardware and software, such as a stationary computer, a smartphone, a server, a tablet computer, or any other computer hardware running software configured to perform this task.

The computer hardware used to generate the dataset may comprise data capturing devices for capturing the information in the dataset. Suitable data capturing devices include cameras, scales, spectrometers, clocks or any other device suitable to capture at least one piece of information to be part of the dataset. Additionally or alternatively, the computer hardware may comprise one or more interfaces for receiving information to be part of the dataset. In an embodiment, the computer hardware comprises an interface for receiving information that was captured by one or more external data capturing devices and/or from a database, such as the material items database. For example, the interface may allow for transmission of production data to the computer hardware from a database that contains information relating to the amount or composition of recyclable material produced in a production facility.

The sorting step may include reporting the dataset and/or all or a part of the available information at least about the quantity of sorted material items, and optionally also about identity, brand, type and/or quality, to the network of nodes for registration in the blockchain.

The computer hardware may run at least one computer program configured to act as a node in a distributed peer to peer network. The program may be configured to add blocks to and/or evaluate blocks of the blockchain data structure. For creating the block to be added to the blockchain the information may either be used directly or, preferably, only a hash value of the information is used. In the latter case, the full information is collected in a database on a server and the blockchain block containing the hash value serves as an external means for proofing integrity of the database. The information reported to the blockchain and/or the server by the sorter may be encrypted. Asymmetric encryption methods may be used. The information may be stored in one or more blocks of the blockchain.

The sorting step may include performing a token transaction registered in the blockchain to account for the sorter's act of sorting items of material and thereby contributing to recycling thereof. The token transaction may include crediting an amount of tokens to the sorter's account, and it may include debiting an amount of tokens from a recycler's account who received sorted material. The amount of tokens may relate to the identity, quality and/or quantity of the recyclable material contained in the products and/or product packaging items sorted by the sorter. The token transaction may be executed by means of smart contracts. The smart contract may credit the sorter's account with tokens in exchange for sorted material items transferred to a recycler. A smart contract may be triggered by the sorter reporting the dataset and/or all or a part of the available information at least about the quantity of sorted material items, and optionally also about identity, brand, type and/or quality, to the network of nodes for registration in the blockchain. Triggering the smart contract may additionally require the recycler's confirmation of the relevant properties of transferred material items. The amount of tokens may depend on the reported quantity, identity, brand, type and/or quality of material items.

The material items may be sorted according to their identity or quality. For example, the sorter may allocate each product or product packaging item to a sorted group. A sorted group may for example contain all products and/or product packaging items containing or consisting of polyethylene (type) having a purity of at least 80 % by weight (quality). Another sorted group may include polypropylene (type) having a purity of at least 90 % by weight (quality). In order to be useful for the recycling process the batches should have a purity of > 50 % by weight, preferably of > 70 % by weight, more preferable > 80 % by weight or > 90 % by weight, most preferable > 95 % by weight.

The sorter may use software assisted image recognition to classify material items into different categories. Software assisted image recognition may include machine learning. Software assisted image recognition can be done with minimum hardware investment. For example, software assisted image recognition can be done using a smart phone with a camera. This allows sorters to better differentiate between different types of materials so that higher prices can be achieved when the packaging material is sold to a recycler.

An important aspect of the invention is that the improved machine learning and AI assisted image recognition in cooperation with a database containing the factual weight and composition of a packaging item allows a more accurate determination of the above mentioned quality of the collected and sorted waste. If e.g. a beverage bottle containing residual amounts of the beverage is scanned only the nominal weight of the bottle will be counted for the batch while the weight of the beverage is simply ignored. As a consequence, on the one hand fraudulent behavior can be impeded because items that have been made heavier by deliberately spreading liquids or dirt on them will still only be accounted their genuine weight stored in the database. And on the other hand collectors will be paid for the exact amount of usable plastic they deliver thus incentivizing them to deliver batches with as least as possible foreign material.

### Recycling step

In an optional recycling step the items of material are recycled to obtain recycled material. Before recycling, a recycler may purchase sorted material items from a sorter.

The recycling step may comprise determining information relating to quantity, identity, brand, type and/or quality of the material items. For example, the recycler may determine the amounts, e.g. mass, number, volume, of recycled material items or the amount or quality of recyclable material contained in these items.

The recycling step may comprise generating a dataset in a predetermined format, the dataset containing information relating to quantity, identity, brand, type and/or quality of the recyclable material contained in the material items recycled. The dataset may be generated using computer hardware and software, such as a stationary computer, a smartphone, a server, a tablet computer, or any other computer hardware running software configured to perform this task.

The computer hardware used to generate the dataset may comprise data capturing devices for capturing the information in the dataset. Suitable data capturing devices include cameras, scales, spectrometers, clocks or any other device suitable to capture at least one piece of information to be part of the dataset. Additionally or alternatively, the computer hardware may comprise one or more interfaces for receiving information to be part of the dataset. In an embodiment, the computer hardware comprises an interface for receiving information that was captured by one or more external data capturing devices and/or from a database, such as the material items database. For example, the interface may allow for transmission of production data to the computer hardware from a database that contains information relating to the amount or composition of recyclable material produced in a production facility.

The recycling step may include reporting the dataset and/or all or a part of the available information at least about the quantity of recycled material items, and optionally also about identity, brand, type and/or quality, to the network of nodes for registration in the blockchain.

The computer hardware may run at least one computer program configured to act as a node in a distributed peer to peer network. The program may be configured to add blocks to and/or evaluate blocks of the blockchain data structure. For creating the block to be added to the blockchain the information may either be used directly or, preferably, only a hash value of the information is used. In the latter case, the full information is collected in a database on a server and the blockchain block containing the hash value serves as an external means for proofing integrity of the database. The information reported to the blockchain and/or the server by the recycler may be encrypted. Asymmetric encryption methods may be used. The information may be stored in one or more blocks of the blockchain.

The recycling step may include performing a token transaction registered in the blockchain to account for the recycler's act of buying sorted items of material from the sorter. The token transaction may include crediting an amount of tokens to the recycler's account, and debiting an amount of tokens from the converter's account. The amount of tokens may relate to the identity, quality and/or quantity of the recyclable material contained in the products and/or product packaging items recycled by the recycler. The token transaction may be executed by means of smart contracts. The smart contract may credit the recycler's account with tokens in exchange for recycled material items transferred to a converter. A smart contract may be triggered by the recycler reporting the dataset and/or all or a part of the available information at least about the quantity of recycled material items, and optionally also about identity, brand, type and/or quality, to the network of nodes for registration in the blockchain. Triggering the smart contract may additionally require the converter's confirmation of the relevant properties of transferred material. The amount of tokens may depend on the reported quantity, identity, brand, type and/or quality of material.

The recycler may use chemical and/or mechanical recycling methods for recycling the sorted material. In certain embodiments, the recycler uses anaerobic gasification for certain portions of material items, such as dirty and mixed plastic inputs. The plastic waste may be sorted and cleaned so that the input contains essentially one type of plastic. Thereby, it will be possible to melt and pelletize it to produce new items (e.g. PET bottle to PET bottle, PET bottle to fabric). Chemical recycling breaks the plastic waste up into its components, creating for example oil derivatives, which can be fed back into the petrochemical industry, or monomers, which can be polymerized or polycondensed to new virgin polymer.

### Converting step

In an optional converting step the items of material are converted to obtain new products. Before converting, a converter may purchase recycled material from a recycler.

The converting step may comprise determining information relating to quantity, type and/or quality of the recycled material. For example, the converter may determine the amounts, e.g. mass, number, volume, of converted material and its quality.

The converting step may comprise generating a dataset in a predetermined format, the dataset containing information relating to quantity, identity, brand, type and/or quality of the recyclable material contained in the material items converted. The dataset may be generated using computer hardware and software, such as a stationary computer, a smartphone, a server, a tablet computer, or any other computer hardware running software configured to perform this task.

The computer hardware used to generate the dataset may comprise data capturing devices for capturing the information in the dataset. Suitable data capturing devices include cameras, scales, spectrometers, clocks or any other device suitable to capture at least one piece of information to be part of the dataset. Additionally or alternatively, the computer hardware may comprise one or more interfaces for receiving information to be part of the dataset. In an embodiment, the computer hardware comprises an interface for receiving information that was captured by one or more external data capturing devices and/or from a database, such as the material items database. For example, the interface may allow for transmission of production data to the computer hardware from a database that contains information relating to the amount or composition of recyclable material produced in a production facility.

The converting step may include reporting the dataset and/or all or a part of the available information at least about the quantity of converted material, and optionally also about identity, brand, type and/or quality, to the network of nodes for registration in the blockchain.

The computer hardware may run at least one computer program configured to act as a node in a distributed peer to peer network. The program may be configured to add blocks to and/or evaluate blocks of the blockchain data structure. For creating the block to be added to the blockchain the information may either be used directly or, preferably, only a hash value of the information is used. In the latter case, the full information is collected in a database on a server and the blockchain block containing the hash value serves as an external means for proofing integrity of the database. The information reported to the blockchain and/or the server by the converter may be encrypted. Asymmetric encryption methods may be used. The information may be stored in one or more blocks of the blockchain.

The converting step may include performing a token transaction registered in the blockchain to account for the converter's act of buying recycled material from the recycler. The token transaction may include crediting an amount of tokens to the recycler's account, and debiting an amount of tokens from the converter's account. Additionally, the converter may sell converted material items to a retailer and/or producer of new material items. The amount of tokens may relate to the identity, quality and/or quantity of the recyclable material contained in the products and/or product packaging items converted by the converter. The token transaction may be executed by means of smart contracts. The smart contract may credit the converter's account with tokens in exchange for converted material items transferred to a producer or retailer. A smart contract may be triggered by the converter reporting the dataset and/or all or a part of the available information at least about the quantity of recycled material items, and optionally also about identity, brand, type and/or quality, to the network of nodes for registration in the blockchain. Triggering the smart contract may additionally require the producer's or retailer's confirmation of the relevant properties of transferred material. The amount of tokens may depend on the reported quantity, identity, brand, type and/or quality of material.

### Material

The invention is not limited to any specific kind of material. However, the system is particularly useful for recycling packaging material items of FMCG (fast moving consumer goods). FMCG are products of comparably low price that are very often bought and used by consumers. Therefore, FMCG packaging items account for a huge amount of waste. Because of their low price and strong competition production costs for FMCG are reduced as far as possible, which includes reduction of packaging costs. Thus, the system and process of this invention is particularly useful for FMCG packaging recycling as it does not add significant costs to the production process. FMCG packaging frequently includes plastic packaging such as lightweight packaging (LWP).

Preferred materials that can be recycled using the system and process of this invention may be selected from the group consisting of plastics, paper, cardboard, metals, glass and any other material as well as combinations thereof.

The material items may be selected from the group consisting of bags, sachets, blisters, jars, trays, boxes, containers, bottles, sheets, labels, lids, foams, films, foils and combinations thereof. The material items may be selected from the group consisting of food packaging, cosmetics packaging, drug packaging, beverage packaging, and other packaging as well as combinations thereof.

The recyclable material is not limited to packaging items but includes any products that are made of or contain a recyclable material. Such products may be selected from tableware, toys, tools, sports equipment, clothing, cooking equipment, electronics, smartphones, furniture, machines, musical instruments, office equipment and parts thereof and combinations thereof.

A preferred recyclable material is plastics. Plastics are highly reusable and easily recyclable, if separated well into discrete polymer categories. They require far less energy and resources than if produced from virgin materials. Reusable containers generate 29 % fewer greenhouse gas (GHG) emissions, 39 % lower energy consumption, and 95 % less solid waste than single-use packaging. Each kilogram of plastics recycled in modern facilities saves about 1.4 kg of CO₂. The largest amount of plastics in the waste streams is from product packaging.

The plastics may preferably be selected from the group consisting of polyamides, polycarbonates, polyesters (e.g. PET, PBT), polyethylenes (including HDPE, MDPE, LDPE, LLDPE, VLDPE, and UHDPE), polypropylenes, polystyrenes, polyurethanes, polyvinyl chloride, polyvinylidene chloride, acrylonitrile butadiene styrene (ABS), styrene acrylonitrile (SAN), and copolymers, blends as well as combinations thereof. Additionally or alternatively, the plastics may be selected from the group consisting of polyepoxides, polymethyl methacrylate (PMMA), polytetrafluoroethylene (PTFE), phenolics, aminoplasts, polyether-etherketones (PEEK), maleimides, polyetherimides (PEI), polyimides, polylactic acid (PLA), silicones, polysulfones, and copolymers, blends as well as combinations thereof.

The metals may be selected from alkali metals, alkaline earth metals, transition metals, post-transition metals, the lanthanides, the actinides, and combinations and alloys thereof. Preferred metals may be selected from gold, silver, copper, iron, nickel, cobalt, titanium, aluminum, zinc, tin, platinum, palladium, the rare earth metals, and combinations and alloys thereof.

Other raw materials that can be recycled according to this invention include ceramics, glass ceramics, and wood.

### Blockchain

The closed loop recycling system of this invention uses the blockchain for accounting and to register information about identity, quality and/or quantity of products or items of packaging that contain or consists of recyclable raw material to the blockchain.

According to an embodiment a producer and/or retailer provides information about quantities of products and/or packaging produced and/or sold to the blockchain.

As used herein "reporting information to the blockchain" means that the participant of the recycling system sends the respective information to the nodes of the recycling network. The "recycling network" represents all nodes that participate in the recycling system of this invention. The nodes then include the information into new blocks of the blockchain. The systems may be built on a dual level. The first blockchain controls access to records of collected waste for each brand in each collection location across the globe. It is built using a permissioned blockchain. The second blockchain may be powered by a decentralized system such as ERC20 token on Ethereum and underlies the "smart contracts" and services for the platform.

The permission based level requires users to sign up to use it (certificates required). Certificates are issued only to participants in the plastics recycling loop. Permissioning on the network is controlled using modelling and access control languages. Hyperledger Fabric, for example, is a platform for distributed ledger solutions underpinned by a modular architecture - delivering high degrees of confidentiality, resilience, flexibility and scalability. Given the sensitivity of data from FMCG companies that will be logged on the ledger, a technology will be used to accommodate multiple layers of permission, meaning the owner of a set of data can control which parts of their data is accessed. Private contracts / private channels between explicitly chosen parties in the supply chain will be built on top using smart contract technology with tokens as currency.

For true end-to-end verification in some of the use cases above, the system may work in a semi-offline mode. For example, confirmation of receipt of plastic and funds can be made cryptographically secure even in the absence of internet access (e.g. as a simple digital signature). These confirms can then be converted into on-chain transactions when the agent returns to network coverage. As the agent typically has no access to the sending address this removes the possibility of double-spend at the recipient end. A differentiated network topology may be required: nodes on the network that are close to the edge may have limited bandwidth but be physically close to transactions occurring in recipient locations.

By adding the respective information to the blockchain, it will in principle be available to the whole recycling network. It is one of the advantages of the system of this invention that the blockchain provides information about identities, quantities, qualities, brands and types of raw material within the material stream. However, it may be desirable that not all information is available to all. This may apply for example to the quantities, types, identities and brands produced and/or sold by manufacturers or retailers, respectively. Therefore, access to the information stored in the blockchain may be limited for certain kinds of information stored therein. For example, the information may be encrypted before the information is included into new blocks of the blockchain. Keys needed for decryption may be available only to the party that sent the information and an evaluator. The evaluator may be a software that calculates benchmarks that represent the success of a party's participation in the recycling system, such as recycling rates specific to a brand, raw material type or geographic area. The evaluating software may run on a server, or one or more of the nodes of the network.

Apart from storing information about recyclable or recycled raw material, the blockchain may also be used to carry out token transactions and/or execute smart contracts. The recycling system of this invention includes token transactions that account for a party's achievements towards recycling of raw materials. For example, a party that delivers properly sorted bales of packaging material to a recycler will receive a token transaction after the recycler confirms receipt of the material. In other words, the blockchain may be used in this invention on the one hand for registering information about identities, volumes and qualities of raw materials, and on the other hand for registering token transactions and smart contracts.

In an embodiment, a collector provides information about identity, quality and/or quantity of products or items of packaging to the blockchain. In return, the collector receives token payment for delivering the respective material items to a sorter and/or a recycler based on cleanliness, depth of sorting and purity of material.

In an embodiment a sorter provides information about identity, quality and/or quantity of products or items of packaging to the blockchain. In return, the sorter will receive payment for delivering the respective material items to a recycler.

Based on the information provided to the blockchain by collectors and sorters, the recycler may identify available material for recycling. It is an aspect of this invention that this information is made available to the recycling network, thereby significantly increasing efficiency and recycling quotas.

As mentioned, the invention uses the blockchain for registering transactions of material items and/or recyclable or recycled material. The blockchain is a distributed ledger technology which is known to the person skilled in the art. The blockchain can be a permissionless or permissioned blockchain. The blockchain can be a public, consortium or private blockchain.

Preferably, the system and process of this invention uses a permissioned blockchain so as to restrict access to certain information to a predefined group of users. The nodes that represent the network of nodes for evaluating transactions of the blockchain may be represented by the computer hardware and software run by the participants of the recycling process and system of this invention. In an embodiment, the network of nodes comprises further users who are not necessarily participants of the process and system of this invention. In principle, every interested party can provide a node to the network of nodes. However, reading and writing permission may be subject to the status of the respective user. For example, reading access of production data reported to the network by a producer may be encrypted as it may contain confidential information. On the other hand aggregated data on volumes, types and costs can be available to all, including the public.

In summary, embodiments of the blockchain will have some or all of the following characteristics:
- Permissioned level above decentralized (permissionless) level
   - While aggregated data on volumes, types and costs etc. can be available to all, including the public and entities not participating in the closed loop recycling system, specific information on companies should be encrypted with keys only available to permissioned actors (eg. each company will have access to own data).
   - This also reduces the number of nodes that will be necessary.
- Needs to be scalable and ecologic
   - Creation of blocks are not subject to computational prowess.
   - Only as many nodes to validate transactions as there are (non public) members in the value chain (FMCGs, recyclers, converters, sorters, etc.).
- Is independent of Proof of Work (PoW) or Proof of Stake (PoS) at permissioned level
- Value for "miners" is created upon
   - the "mining" of plastics, i.e. the diversion of plastic packaging from landfill or oceans, as well as
   - the provision of services to the value chain, such as, but not limited to
      - Services to populate the Image recognition database with pictures
      - Al services
      - Validation services for the Distributed ledger
      - Equity for plastic reception centers
- Possible creation of PoW:
   1) A collector deposits a number of items on a conveyor belt.
   2) The system according to the invention employs technology that allows the counting and recognition of individual pieces of plastic.
   3) Collected plastic is then linked to a database so that weight, value and type can be identified for each producer.
   4) The system will indicate when the earlier of a ton of plastic or a specific number of individual items will have been reached which then will be filed as a "transaction unit".
   5) The transaction unit will be given a unique digital signature via an encrypted algorithm that converts the digital information (metadata) of the transaction unit into a hash value.

Advantages that may be created by using these characteristics are:
- Low energy consumption for PoW or hashing.
- Only collectors of plastic waste have the ability to generate tokens through PoW, which they can then exchange for fiat currency.
- Other actors in the reverse supply chain receive tokens in lieu of fiat currency for services only.

In an embodiment, process and system of this invention uses tokens to incentivize participants to contribute to the recycling of materials. Token transfers may be effected by means of smart contracts.

In the following, an example scenario for the use of a blockchain for recording transactions within the closed loop recycling system will be given demonstrating different aspects of the invention all of which not necessarily have to be employed at the same time.

An exemplary amount of 100 tons of plastic waste is circulated in the system. The amount of cash and tokens is symbolized by "$$$" and "TTT", respectively. Where a transaction is recorded in the blockchain in the respective step, an "x" is placed in the last column of the table and the cells containing the recorded values are outlined with bold lines. The set of tables follows the lifecycle of the plastic. "Other costs" cover the costs for transport and landfill or incineration of unusable material. For this example, it is assumed that 90 % by weight of the collected waste can be recycled while the remaining 10 % are of unusable quality and have to be discarded. The token exchange is an entity taking care of the conversion between tokens and fiat money and the token transfers. The value of a token may e.g. be set in relation to an average market price of recycled plastics. The reception center and the transfer station are the receiving and delivering sections of the sorter.

### Step 1 - Initial state

A FMCG producer holds a certain amount of money sufficient for purchasing the amount of 100 tons of plastic waste. The token exchange has issued an amount of tokens for the system which is recorded in the blockchain.

| **Actor** | **Cash** | **Tokens** | **Plastic** | **Proof in blockchain** |
|---|---|---|---|---|
| FMCG producer | $$$ | | | |
| Token exchange | | TTT | | x |
| Collector | | | 100 | |
| Reception center | | | | |
| Transfer station | | | | |
| Other costs | | | | |
| Recycler | | | | |
| Converter | | | | |

### Step 2 - Delivery of plastic waste to the reception center

The FMCG producer buys tokens from the token exchange in order to allow purchase of 100 tons of waste plastic. The collector receives a certain fraction (e.g. 50 %) of the value of the waste in tokens until verification of the value of his batch.

| **Actor** | **Cash** | **Tokens** | **Plastic** | **Proof in blockchain** |
|---|---|---|---|---|
| FMCG producer | $$$ | TTT | | x |
| Token exchange | $$$ | TTT | | x |
| Collector | | TTT | | x |
| Reception center | | | 100 | x |
| Transfer station | | | | |
| Other costs | | | | |
| Recycler | | | | |
| Converter | | | | |

### Step 3 - Verification by transfer station

Verification of quantity / weight takes place with counting unit and weight scale, scrap and landfill costs as well as transport costs are paid in tokens. Outstanding balance is paid to collector, but only on 90 tons that were useful quality. The amount of 10 tons which have been discarded does not necessarily have to be recorded in the blockchain as it is the difference to the originally delivered waste.

| **Actor** | **Cash** | **Tokens** | **Plastic** | **Proof in blockchain** |
|---|---|---|---|---|
| FMCG producer | $$$ | TTT | | |
| Token exchange | $$$ | TTT | | x |
| Collector | | TTT | | x |
| Reception center | | | | |
| Transfer station | | | 90 | x |
| Other costs | | TTT | 10 | x |
| Recycler | | | | |
| Converter | | | | |

### Step 4 - Payment of collector

The collector exchanges all of his tokens into fiat currency.

| **Actor** | **Cash** | **Tokens** | **Plastic** | **Proof in blockchain** |
|---|---|---|---|---|
| FMCG producer | $$$ | TTT | | |
| Token exchange | $$$ | TTT | | x |
| Collector | $$$ | | | x |
| Reception center | | | | |
| Transfer station | | | 90 | |
| Other costs | | TTT | 10 | |
| Recycler | | | | |
| Converter | | | | |

### Step 5 - Recycling

Recycler receives the waste material and gets paid for transformation services in tokens.

| **Actor** | **Cash** | **Tokens** | **Plastic** | **Proof in blockchain** |
|---|---|---|---|---|
| FMCG producer | $$$ | TTT | | |
| Token exchange | $$$ | TTT | | x |
| Collector | $$$ | | | |
| Reception center | | | | |
| Transfer station | | | | x |
| Other costs | | TTT | 10 | |
| Recycler | | TTT | 90 | x |
| Converter | | | | |

### Step 6 - Purchase of pellets and production of packaging

The FMCG producer (or the converter) buys pellets from the token exchange at market price using tokens they have plus cash. The pellets are transferred to converter which produces the packaging and gets paid in tokens for the service.

| **Actor** | **Cash** | **Tokens** | **Plastic** | **Proof in blockchain** |
|---|---|---|---|---|
| FMCG producer | | TTT | | x |
| Token exchange | $$$ | TTT | | x |
| Collector | $$$ | | | |
| Reception center | | | | |
| Transfer station | | | | |
| Other costs | | TTT | 10 | |
| Recycler | | TTT | | x |
| Converter | | TTT | 90 | x |

### Step 7 - Payment of service providers

The packaging material is delivered to the FMCG producer. Recycler and other service providers convert their tokens into fiat money.

| **Actor** | **Cash** | **Tokens** | **Plastic** | **Proof in blockchain** |
|---|---|---|---|---|
| FMCG producer | | TTT | 90 | x |
| Token exchange | | TTT | | x |
| Collector | $$$ | | | |
| Reception center | | | | |
| Transfer station | | | | |
| Other costs | $$$ | | 10 | x |
| Recycler | $$$ | | | x |
| Converter | $$$ | | | x |

### Tokenization

Most payments in the loop value chain are made with tokens. Tokenized payment is low transaction cost, transnational and fungible. Every token "mined" will be allocated to a specific delivery of plastic and will trace its journey through the closed loop, documenting the full extent of the plastic waste caused and recovered by each filler / retailer. By this virtue, there will be a means of accountability with the funds used to pay collectors and sorters, as well as to invest in local recycling capacity. For practice, it is proposed to create a fungible digital asset, a "token", where part of the goal is to create a market where participants in the value chain can buy, sell, trade and then redeem for fiat currency.

While the token is designed as an asset backed utility token, it may also function for validation as a Proof of Work reward. Both PoW and other methods of verification to authenticate blocks in a blockchain are designed to create a sufficiently high cost to prevent spamming and disincentivize "bad actors" in a decentralized network. They are superfluous in a permissioned blockchain. A validation process is, however, necessary in a system that rewards collectors of waste.

Apart from the token transactions described above with reference to the different steps in the inventive process, tokens may be transferred to other parties who contribute to the functioning of the inventive process and system.

Examples are users who invest in the system by purchasing tokens in exchange for fiat currency. In an embodiment, users who send tagged images of material items suitable for training machine learning algorithms can be rewarded with tokens. Token transfers may be automatically executed using smart contracts executed on the blockchain. Tagged images can also be provided by sorters who may receive extra tokens for sending tagged images for training machine learning algorithms. Incentivizing the contribution of tagged images to the system will improve software assisted image recognition and thereby add to the quality of sorting material items. Further actions that may result in token transactions are contributions in the form of
- Services to populate the Image recognition database with pictures,
- Al services, such as improving machine learning algorithms or Al model training,
- Validation services for the distributed ledger.

### Material items database

Data will be stored on a decentral data storage entity. Hashes of metadata and certain other transaction data will be recorded on the blockchain.

Preferably, the storage arrangement comprising a plurality of decentral storage units may be formed as a decentral file system (such as IPFS) or a decentral object store (such as storj) or a decentral distributed database (such as BigchainDB) controlled by the peer-to-peer application.

### Machine learning

While the synthetic data created for image recognition is unique, it is only useful if matched to a database with all the necessary metadata to reach conclusions about the type, weight, quality of the package and its producer. One of the world's largest packaging database with all the relevant SKUs is currently being put together.

Software assisted image recognition allows identification of the quality of packaging material, thereby facilitating proper categorization even of rare types of plastic. Software assisted image recognition may use machine learning algorithms to determine the quality of packaging material.

Machine learning algorithms may be trained with a large number of tagged images of packaging material, i.e. the training process may be a supervised or reinforced training.

Optionally, consumers may assist in training machine learning algorithms by providing images of packaging material. Consumers may be rewarded with tokens for their contribution.

The system of this invention can make software assisted image recognition available to all sorters and pickers of packaging material even in third world countries, thereby providing new income streams.

The software assisted image recognition may not only provide information about quality and type of packaging material, but also about brands.

### System

This invention also relates to a recycling system for recycling material, comprising
at least one network of nodes administering a blockchain data structure configured to receive and store reported information at least about the quantity of sorted material, and optionally also about identity, brand, type and/or quality,
computer hardware and software run by a sorter configured
   a) to generate one or more datasets in a predetermined format, the datasets containing information relating to quantity, identity, brand, type and/or quality of the recyclable material contained in the material items sorted, and
   b) to report the dataset(s) and/or all or a part of the available information at least about the quantity of sorted material items, and optionally also about identity, brand, type and/or quality, to the network of nodes for registration in the blockchain;
computer hardware and software run by a recycler configured to read the dataset and/or all or a part of the information reported by the sorter.

This system allows for the transparency needed to make sorted material available to recyclers. Recyclers can access the information stored in the blockchain. In embodiments, the blockchain is configured to execute smart contracts to facilitate easy and cost-effective transfers of sorted material from sorters to recyclers. Details about smart contracts between sorters and recyclers are described above with reference to the process of this invention.

In an embodiment, the system further comprises means for performing software assisted image recognition configured to classify material items into categories. The means may be the same hardware used to generate the dataset described above, or a different hardware. Software assisted image recognition includes machine learning methods. Preferred machine learning models of this invention are trained models using tagged images of material items. The images may be tagged by consumers, sorters and/or any other entity. Users who contribute tagged images may be rewarded with tokens.

The system may comprise a material items database having material item information stored therein. The database is useful to store features of material items. The database may provide features of material items to the image recognition software. This allows the image recognition algorithm to complete datasets for reporting to the blockchain. For example, the image recognition software may have classified a material item according to its brand. The material items database may contain information relating to type and amount of material present in the item. Thereby, a complete set of data may be created by the sorter and stored in the blockchain.

The computer hardware usable in the context of the present system is not particularly limited. It may be selected from a stationary computer, a portable computer, a smartphone, a server, and a tablet computer.

### Brief description of the drawings

- **Figure 1A**: A chart illustrating the flow of material items according to some processes and systems of this invention
- **Figure 1B**: A chart illustrating the flow of material items and information reported into the blockchain according to some processes and systems of this invention
- **Figure 2**: A chart illustrating the flow of material items and tokens according to some processes and systems of this invention

### Preferred embodiments

The following detailed description relates to a preferred illustrative embodiment that is to be understood as a non-limiting example of how the invention can be put into practice.

### Production step

In a production step a manufacturer of packaged goods uses plastic as a recyclable raw material for packaging. The manufacturer buys tokens equivalent to the volumes of plastic either used in the packaging that he introduces into the market. The manufacturer not only buys tokens registered in the blockchain data structure, but also reports volume and type of packaging material into the system.

### Retail step

Retailers may participate in the system of this invention by purchasing products from the manufacturer and by selling these products to consumers.

### Consuming step

Consumers buy the products sold by the retailer and dispose of the packaging material.

### Collecting step

Collectors collect the disposed packaging material from the consumer. The collectors can be a waste collection service provider or an individual who brings the collected packaging material to a reception center.

The collectors receive tokens from sorters based on quantity and quality of collected packaging material.

### Sorting step

Sorters sort the collected packaging material based on its type. For example, sorters sort the material into categories based on the type of plastic. Sorters may consolidate sorted packaging material into bales.

The sorter may use software assisted image recognition to separate different categories of packaging material. Software assisted image recognition may include machine learning. Software assisted image recognition can be done with minimum hardware investment. For example, software assisted image recognition can be done using a smart phone with a camera. This allows sorters to better differentiate between different types of materials so that higher prices can be achieved when the packaging material is sold to a recycler.

The sorter reports volume and type of packaging material into the blockchain. The sorter pays tokens to the collector based on quantity and quality of the collected material that the sorter received from the collector.

### Recycling step

The recycler receives material from the sorter, and confirms quantity and quality of the received bales. After confirmation, the recycler pays tokens to the sorter based on quantity and quality of the bales.

The recycler creates recycled raw material such as plastic pellets, and reports quantity and quality of recycled raw material into the blockchain. The recycler sells recycled raw material to a converter who produces new packaging material from the recycled raw material.

The recycling step includes chemical and/or mechanical recycling depending on the exact type of plastic packaging material and its purity.

### Conversion step

The converter pays tokens to the recycler based on quantity and quality of recycled raw material.

The converter consolidates sufficient material according to the desired specifications to produce new packaging material.

### Role of the blockchain

The information held in the blockchain drastically improves the efficiency of physical shipment of packaging material to specialized recyclers and allows full transparency as to quality levels, volumes et cetera. Furthermore, prices for many quality levels will be significantly more transparent.

Plastics has a myriad of manifestations. In general, its recyclability depends on how well sorted it is into specific material groups like PET, HDPE, etc. These groups are commonly assigned a number, such as 1 for PET, 2 for HDPE, etc. in many cases this number is imprinted on the bottom of the package.

Until today, only PET, HDPE, and clean fractions of LDPE and PP are recycled. The dirty and contaminated fractions of all other plastics are expensive to recycle, and are thus burnt for energy or landfilled, often landing in oceans.

By using the blockchain technology that registers the reports of quality and quantity of packaging material and facilitates transactions of tokens, all kinds of plastics can be recycled.

Payments of tokens may be implemented in the blockchain, using smart contracts.

### Role of software assisted image recognition

Software assisted image recognition allows identification of the quality of packaging material, thereby facilitating proper categorization even of rare types of plastic. Software assisted image recognition may use machine learning algorithms to determine the quality of packaging material.

Machine learning algorithms may be trained with a large number of tagged images of packaging material, i.e. the training process may be a supervised or reinforced training.

Optionally, consumers may assist in training machine learning algorithms by providing images of packaging material. Consumers may be rewarded with tokens for their contribution.

The system of this invention can make software assisted image recognition available to all sorters and pickers of packaging material even in third world countries, thereby providing new income streams.

The software assisted image recognition may not only provide information about quality and type of packaging material, but also about brands.

### Description of the figures

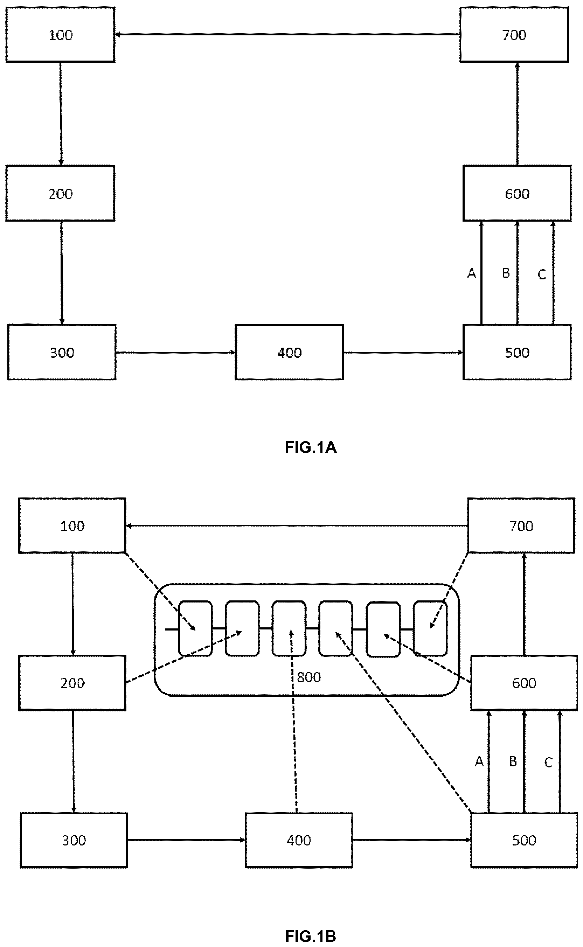

**Figure 1A** illustrates the flow of material and material items according to preferred embodiments of this invention. Producer 100 produces items of material. The flow of material items is illustrated by solid arrows. The material items are transferred from producer 100 to retailer 200. Retailer 200 sells material items to consumers 300. Collector 400 collects material items from consumer 300 after use. Collector 400 transfers collected material to sorter 500. Sorter 500 transfers portions A, B, C of sorted material items to recycler 600. Recycler 600 transfers recycled material, e.g. pellets, to converter 700. Converter 700 transfers new items of recycled material to producer 100, thereby closing the circle. The invention is not limited to exactly this illustrative sequence of transfers. For example, producer 100 may also act as retailer 200, or there may be more than one retailer 200, or one or more wholesalers may be in the loop. Further, there may be different recyclers 600, e.g. each recycler 600 specialized in recycling specific types of material.

**Figure 1B** illustrates the flow of information into a blockchain 800. The flow of information is illustrated by broken line arrows. Producer 100 reports information about produced quantity, and one or more of identity, brand, type and/or quality to the blockchain 800. The information will be included in the growing blockchain, thereby becoming immutable and in principle accessible by all user with access to the blockchain. In preferred embodiments, access to the information reported by producer 100 will be restricted, i.e. encrypted. Retailer 200 reports information about sold quantity, and one or more of identity, brand, type and/or quality to the blockchain 800. Access to the information reported by retailer 200 may be accessible to all, or encrypted. Collector 400 reports information about collected quantity, and one or more of identity, brand, type and/or quality to the blockchain 800. Access to the information reported by collector 400 may be accessible to all, or encrypted. Sorter 500 reports information about sorted quantities, and one or more of identity, brand, type and/or quality to the blockchain 800. Access to the information reported by sorter 500 may be accessible to all, or encrypted. Recycler 600 reports information about recycled quantities, and one or more of identity, brand, type and/or quality to the blockchain 800. Access to the information reported by recycler 600 may be accessible to all, or encrypted. Converter 700 reports information about converted quantities, and one or more of type and/or quality to the blockchain 800. Access to the information reported by converter 700 may be accessible to all, or encrypted. While the figure shows that reported information from different participants will be registered in different blocks of the blockchain, it is within the scope of this invention that information of more than one participant is written into one block of the blockchain. Further, it is also within the scope of the invention that the data may be collected on a server which then performs the task of creating derived data, e.g. a hash value, and reporting the derived data to the blockchain. The blockchain serves in this case only as a means for proving authenticity of the data and transactions recorded on the server.

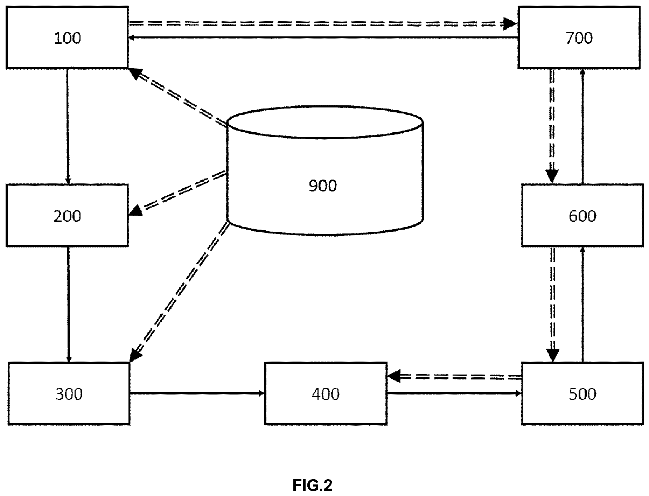

**Figure 2** illustrates the flow of tokens among the participants of the system and process of this invention. The flow of tokens is illustrated by double-lined arrows. Producer 100 and retailer 200 buy tokens from the token exchange 900. The tokens are registered in a blockchain (not shown). The blockchain may the same blockchain as used for registering information about quantity, identity, brand, type and/or quality, or it may be a different blockchain. Consumers 300 may purchase tokens for green charity or speculation. Collector 400 receives tokens from sorter 500 who pays for the transfer of material items. Sorter 500 receives tokens from recycler 600 who pays for the transfer of material items. The payment can be effected with smart contracts processed by the blockchain. Converter 700 pays tokens to recycler 600 in return for recycled material. Converter 700 may receive tokens from producer 100 in exchange for converted material items. The tokens can be exchanged into fiat currency, and tokens can be bought with fiat currency.

## Claims

1. A process for recycling material, comprising the steps of
a. collecting a plurality of items of material that comprise one or more materials to be recycled,
b. sorting the collected items of material according to their identity, brand, type and/or quality, to obtain portions of sorted material items,
c. creating one or more datasets relating to the portions of sorted materials, the datasets containing information relating to the quantity and origin of sorted material, and further containing information about identity, brand, type and/or quality of the sorted material,
d. reporting information at least about the quantity and origin of sorted material, and optionally also about identity, brand, type and/or quality, to a network of nodes for registration in a blockchain.

2. Process according to claim 1, wherein the step of sorting items of material includes for at least some of the plurality of items:
separating items of material into smaller items according to their identity, type and/or quality.

3. Process according to claim 1 or 2, wherein
the identity of an item refers to the identification of the item based on an identifier such as a tag or other features that are specific, or pseudo-specific to said individual item,
the brand of an item refers to the origin of the item such as the items manufacturer or retailer,
the type of an item refers to materials used in the item such as the polymer or polymer mixture that the item contains,
the quality of the item refers to the status of the item such as the cleanliness, the purity relating to the material, or the size of the item, and/or
the quantity refers to the weight, volume and/or number of material items.

4. Process according to one of claims 1 to 3, wherein the steps of collecting and sorting take place in the same or different locations, and/or wherein the process comprises the additional step of
transferring items of material from a collecting entity to a sorting entity.

5. Process according to claim 4, wherein the process comprises the additional step of reporting at least the quantity of transferred material, and optionally also identity, brand, type and/or quality, to a network of nodes for registration in a blockchain.

6. Process according to at least one of the preceding claims, comprising the step of providing a material items database configured to store information about material items, such as type and weight of an item.

7. Process according to at least one of the preceding claims, wherein the sorting step comprises
determining at least one property of an item, such as identity, brand, type, quality and/or quantity.

8. Process according to claim 7, wherein
- determining at least one property of an item comprises performing software assisted item recognition,
- a machine learning method for determining at least one property of the item is utilized, and/or
- a supervised machine learning method, such as a support vector machine or an artificial neural net, for determining at least one property of the item is utilized.

9. Process according to at least one of claims 7 or 8, wherein determining at least one property of an item
- includes accessing information about raw material items from the material items database, and/or
- comprises utilizing at least one item property capturing device such as a spectral sensor, a photometer, a camera, a weighing scale, a hardness tester, a QR code reader and/or a bar code reader.

10. Process according to at least one of the preceding claims, comprising the step of adding a block to the blockchain, the block containing information about at least the quantity of sorted material, and optionally also identity, brand, type and/or quality of sorted material.

11. Process according to at least one of the preceding claims, wherein the reported information is made available to one or more recyclers.

12. Process according to at least one of the preceding claims, wherein a material transfer from a delivering participant to a receiving participant is reported to the network of nodes, such as a material transfer from a collector to a sorter is reported by the collector.

13. Process according to claim 12, wherein a token transfer is executed by the blockchain.

14. Recycling system for recycling for recycling material, comprising
at least one network of nodes administering a blockchain data structure configured to receive and store reported information at least about the quantity and origin of sorted material, and optionally also about identity, brand, type and/or quality,
computer hardware and software run by a sorter configured
a) to generate one or more datasets in a predetermined format, the datasets containing information relating to quantity, origin, identity, brand, type and/or quality of the recyclable material contained in the material items sorted, and
b) to report the dataset(s) and/or all or a part of the available information at least about the quantity and origin of sorted material items, and optionally also about identity, brand, type and/or quality, to the network of nodes for registration in the blockchain;
computer hardware and software run by a recycler configured to read the dataset(s) and/or all or a part of the information reported by the sorter.

15. System according to claim 14, wherein
- the system comprises means for performing software assisted image recognition configured to classify material items into categories, and/or
- the system comprises means for performing software assisted image recognition which includes machine learning, and/or
- the system comprises a material items database having material item information stored therein, and/or
- the computer hardware is selected from a stationary computer, a portable computer, a smartphone, a server, and a tablet computer.
